# EUROPEAN PATENT APPLICATION

(11) **EP 2 680 093 A2**
(43) Date of publication of application: **01.01.2014**
(21) Application number: 13173747.0
(22) Date of filing: 26.06.2013
(51) Int. Cl.: G05B 19/048

(54) **System for enhancing power tools**

(30) Priority: 26.06.2012 US 201261664428 P; 15.03.2013 US 201313835060
(71) Applicant: Black & Decker Inc., Newark, Delaware 19711 (US)
(72) Inventor: Ashinghurst, Jeremy D., Halethorpe, MD Maryland 21227 (US); Brotto, Daniele C., Baltimore, MD Maryland 21234 (US); Busschaert, Jason, Bel Air, MD Maryland 21014 (US); Puzio, Daniel, Baltimore, MD Maryland 21234 (US); Byatnal, Raghavendra R., Cockeysville, MD Maryland 21030 (US)
(74) Representative: Bell, Ian Stephen

(57) **Abstract**

A system includes a power tool battery pack, a power tool, a portable power supply, a non-motorized sensing tool, and/or a power tool battery pack charger. A separate computing device, such as a smartphone, tablet or computer, communicates wirelessly with the power tool battery pack, the power tool, the portable power supply, the non-motorized sensing tool, and/or the power tool battery pack charger. The computing device monitors a data value representative of a condition of the power tool battery pack, the power tool, the portable power supply, the non-motorized sensing tool, and/or the power tool battery pack charger, and performs an action responsive to the monitored data value.

## Description

The present invention relates to a system for enhancing power tools and particularly a system for wirelessly enhancing power tools.

It is desirable to rapidly and efficiently modify attributes of power tools to better match the jobsite application. For example, it may be preferable to change the blade speed in a circular saw in order to better cut a particular material. Accordingly, it is an object of the invention to provide a system to rapidly modifying attributes of power tools.
Fig. 1 illustrates an exemplary system according to the invention.

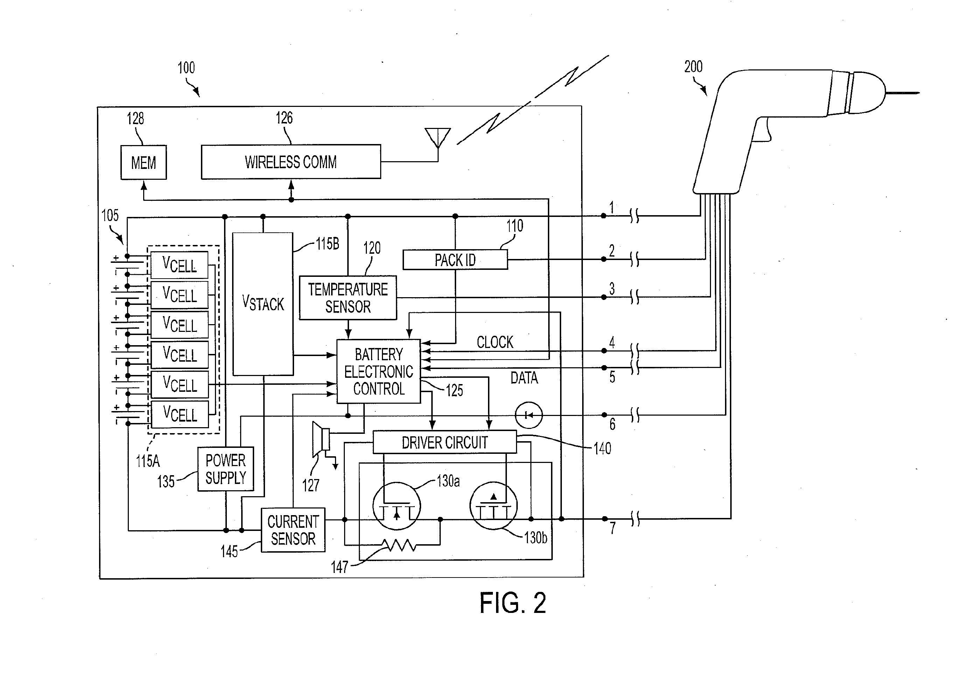

Fig. 2 is a circuit schematic of an exemplary power tool battery pack.
Fig. 3 is a flowchart of different exemplary processes that can be performed by the system of Fig. 1.

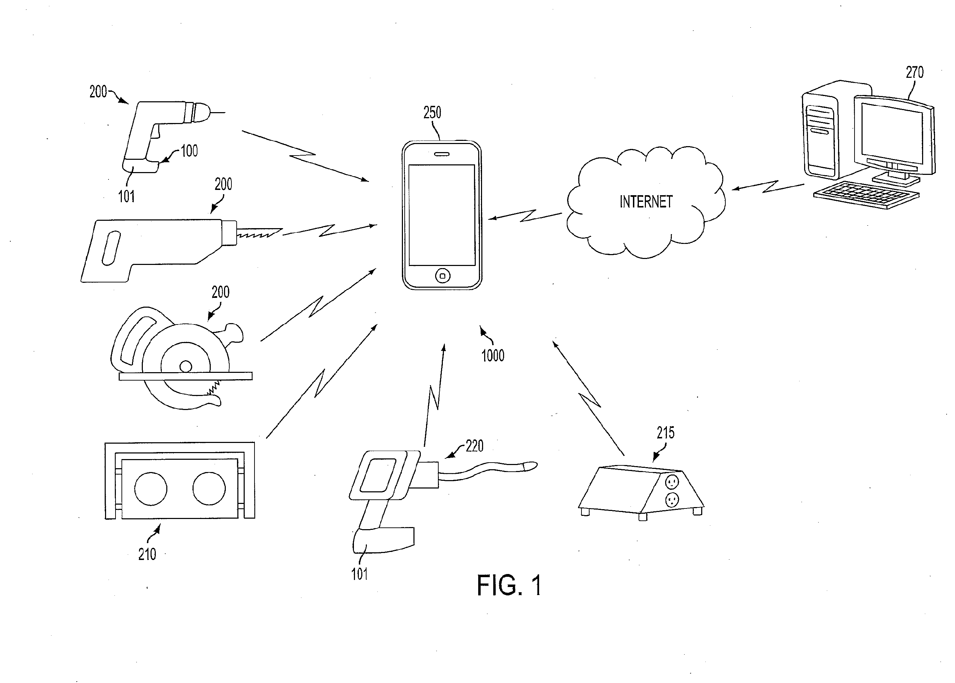

FIG. 1 illustrates an exemplary system 1000 for enhancing power tools according to the invention. In particular, power tools 200 may be drill, circular saws, reciprocating saws, jigsaws, miter saws, table saws, etc. Some of the power tools 200 may be cordless and thus be connectable to power tool battery packs 100. Persons skilled in the art shall understand that "battery pack" and "power tool battery pack" as used herein shall mean a set of rechargeable battery cells 105 disposed in a housing 101 that for use with a power tool that is powered by an electrical motor, such as a drill 200, circular saw, reciprocating saw, jigsaw, etc. Persons skilled in the art shall recognize that power tool battery pack 100 may be the power tool battery packs disclosed in US Patent Nos. 7,405,536, 7,618,741, 7,602,146 and/or 8,044,640, which are hereby incorporated in full by reference, modified so as to include a communication circuit, and preferably a wireless communication circuit 126, as further explained below.

System 1000 may also include chargers 210 for battery packs 100, including radio chargers such as the radio charger disclosed in US Patent No. 6,308,059, which is hereby incorporated in full by reference.

System 1000 may also include a non-motorized sensing tool 220, as described in US Patent No. 8,251,157, which is hereby incorporated in full by reference. Persons skilled in the art shall recognize that sensing tool 220 may be an inspection device, a clamp meter, an IR thermometer, an IR camera, an inspection camera, a wall scanner, etc.

System 1000 may also include a portable power supply 215, such as that described in US Publication No. 2011/0090726, filed on November 1, 2010, which is hereby incorporated in full by reference.

System 1000 may also include a computing device 250, such as a personal computer, tablet, mobile telephone, smartphone, etc. Computing device 250 is preferably connectable to a server 270 via the internet. Persons skilled in the art will recognize that computing device 250 preferably connects to the internet via a wireless communication circuit/protocol, such as Wi-Fi, Bluetooth, Zigbee, 3G/4G data systems, etc.

It is desirable that power tools 200, battery packs 100, non-motorized sensing tools 220, portable power supply 215 and/or chargers 210 be in communication with computing device 250. Preferably such communication will occur via a wireless communication system 126, such as Wi-Fi, Bluetooth, Zigbee, infrared light, RF, etc. Persons skilled in the art will recognize that other communication schemes may be used that do not require a direct wired connection between computing device 250 and the power tools 200, battery packs 100, non-motorized sensing tools 220, portable power supply 215 and/or chargers 210. Such communication schemes may involved transmitting audio signals, using capacitive codes and/or visual codes.

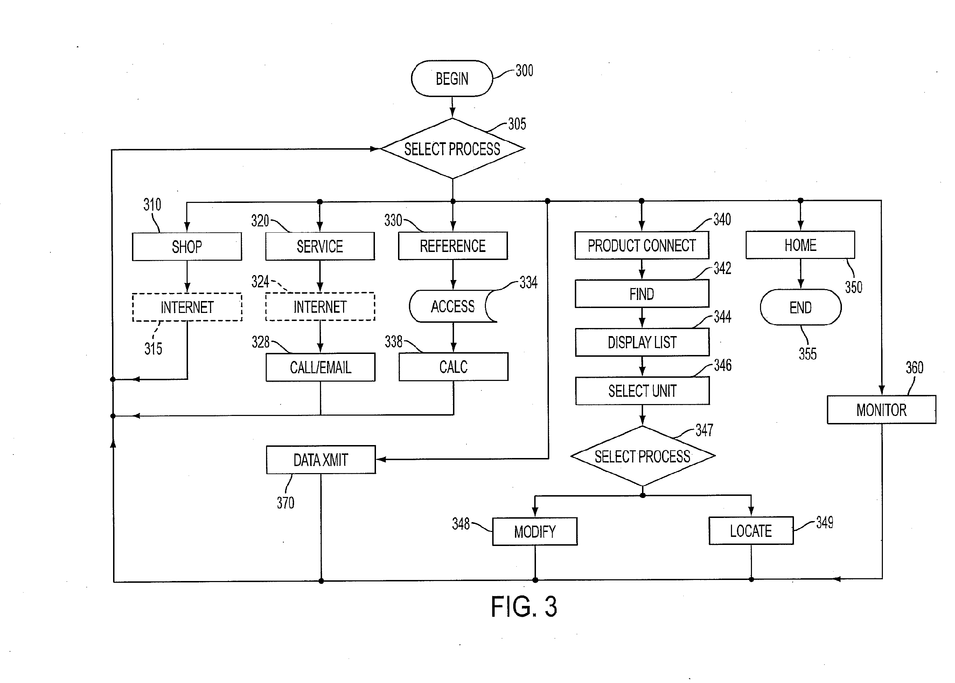

Computing device 250 may have a program or app that implements the steps shown in the flowchart of FIG. 3. A user may begin the program at step 300 by, for example, selecting the appropriate app/program on her computing device 250. Alternatively, the program or app can begin automatically upon connection with or request from the power tools 200, battery packs 100, non-motorized sensing tools 220, portable power supply 215 and/or chargers 210.

In response to such selection, computing device 250 may show several process choices for the user to select (step 305). These process choices may include shopping for tools or related products (step 310), obtaining service information (step 320), refer to construction reference materials (step 330), connect to nearby power tools or products (step 340), or go back to a home menu to end the app (step 350).

For example, if the user selects the shopping process (step 310), computing device 250 may communicate with a server 270 via the internet (step 315) that would provide the user information on the different available products, as well as allow the user to shop online for such products. Persons skilled in the art may recognize that the computing device 250 may use GPS or cell-location data to identify the closest stores carrying the desired products.

If the user selects the service process (step 320), computing device 250 may communicate with a server 270 via the internet (step 324) that provides the user information on the different available services, including the closest repair/service center, contact information, etc. Persons skilled in the art may recognize that the computing device 250 may use GPS or cell-location data to identify the closest repair/service center. The user can then call or email the repair/service center (step 328) to schedule an appointment. Persons skilled in the art are further referred to US Application No. 61/570,484, filed on December 14, 2011, entitled "System and Method for Interacting With Customer," which is fully incorporated herein by reference, for further details on the service process.

Persons skilled in the art will recognize that computing device 250 may transmit data to the repair/service center about battery pack 100, power tool 200, charger 210, portable power supply 215 and/or non-motorized sensing tool 220, such as cycle numbers, clutch activation count, current draw profiles, and other usage data. Similarly, computing device 250 can transmit such data to other destinations, such as a supervisor's computing device, to alert the supervisor of a user's use or abuse of a battery pack 100, power tool 200, charger 210, portable power supply 215 and/or non-motorized sensing tool 220. Such data can be used to monitor the user's productivity.

Persons skilled in the art will recognize that the computing device 250 could be used to record noises originating from power tool 200 and send those noises to the repair/service center for diagnosis of the power tool 200. The app could also analyze the noises and provide some troubleshooting advice for power tool 200.

If the user selects the reference process (step 330), the app would access data stored in memory (step 334). Persons skilled in the art will recognize that the memory could be within or without computing device 250. Such data could include reference materials, such as handbooks on different construction techniques, the different construction codes, such as the International Building Code, the International Residential Code, the International Plumbing Code, etc. The data could also include other executable routines, like calculator code for converting measurements between different units (e.g., converting feet to meters), calculating stair rise run, baluster spacing, roof pitches, HVAC calculations, etc., as well as different cost estimation tools, landscaping tools, etc.

The user can also choose to connect to nearby power tools, battery packs or other products (step 340). If such process is selected, computing device 250 would proceed to wirelessly contact all nearby power tools, battery packs and other products (step 342). Once contact has been made, computing device 250 would display a list of nearby power tools, battery pack and other products (step 344).

It may be preferable to color-code the different listed power tools, battery pack and other products. For example, tools that are owned (or paired) with the user can be shown in green. Tools that can't be contacted or accessed by the user can be shown in red. Tools that are owned by colleagues or a group are shown in yellow. Tools that have not been associated with a particular user can be shown in white.

Similarly, persons skilled in the art will recognize that computing device 250 may show a list of previously-paired power tools, battery packs and other products, and show the ones that are nearby in one color, while showing the others in another color. In this manner, the user will know which power tools, battery packs and other products are within a certain radius, thus conducting a quick inventory check.

The user can then select a particular power tool, battery pack or other product (step 346). Once a particular power tool, battery pack or other product is selected, computing device 250 can display different attributes for such product for review. For example, in the case of battery pack 100, some of the attributes can include an identifying name (e.g., "Danny's Pack 1"), a picture icon, device model, the charge status, password (for accessing the tool information through another user's phone), temperature, number of charge cycles, etc. Persons skilled in the art will recognize that this information is kept in memory 128 of the battery pack 100, which is then transmitted via the wireless communication circuit 126 to computing device 250, possibly upon a direct request from computing device 250.

Persons skilled in the art will recognize that some of the attributes can be modified. For example, the identifying name and the picture icon can be modified by the user by selecting a modification process (steps 347, 348) and inputting the new information. This data can then be wirelessly transmitted to the battery pack 100 for storage within a memory 128. Persons skilled in the art will recognize that the user can input the new information (as well as other commands, etc.) via a keyboard or touchscreen in computing device 250 and/or by giving verbal commands which are recognized by the computing device 250.

In addition to modifying data related to the battery pack identity, a user can modify data related to the performance of battery pack 100 via computing device 250. For example, a user can program the battery pack 100 to announce when it is at full charge. This announcement can be communicated via the display of computing device 250, haptic feedback of computing device 250 and/or battery pack 100, and/or sound emitted by the computing device 250 and/or transmitted via a speaker or piezo 127 of battery pack 100.

Similarly, the user can program battery pack 100 (or portable power supply 215) to announce when it is near discharge, when it is hot, when it is outside of communication range with computing device 250, etc. Persons skilled in the art will recognize that this can be accomplished by monitoring the outputs of voltage monitor 115, current sensor 145, temperature 120, etc. in battery pack 100.

The user can also disable (and enable) the battery pack 100 via computing device 250. Persons skilled in the art will recognize that "enable" and "disable" refer to the ability of battery pack 100 to provide power to a power tool 200 and/or the ability of battery pack 100 to receive power from a charger to charge battery cells 105. The ability (or inability) to provide power to a power tool 200 can be enabled or disabled by controlling driver circuit 140 to maintain semiconductor device 130a in an on- or off-state, respectively. Similarly, the ability (or inability) to receive charging power to charge battery cells 105 can be enabled or disabled by controlling driver circuit 140 to maintain semiconductor device 130b in an on- or off-state, respectively.

The user can also program battery pack 100 so that it is only enabled (and thus providing power and/or accepting charging power) when it is within vicinity of computing device 250. This can be accomplished by computing device 250 sending a ping signal to battery pack 100. If battery pack 100 receives the ping signal, then battery pack 100 continues to provide power and/or accept charging power. However, if battery pack 100 does not receive a ping signal for a predetermined period of time, battery pack 100 can assume that it is outside of communication range with computing device 250 and disable itself (thus not providing power or accepting charging power).

The user can also program battery pack 100 so that it is only enabled (and thus providing power and/or accepting charging power) when certain conditions are met. For example, battery pack 100 would be enabled for up to a predetermined number of charge cycles, a predetermined time period or number of uses, and then disabled until reset by the user via computing device 250.

Persons skilled in the art will recognize that, while the above description is particular to battery packs, the same functionality can be provided for portable power supply 215, including the ability to enable/disable portable power supply 215, etc.

Similarly, a power tool 200, non-motorized sensing tool 220 and/or chargers 210 provided with a programmable control and wireless communication circuit may also be contacted via computing device 250. For example, power tool 200 can store tool usage patterns, tool conditions, etc., which can be transmitted to computing device 250 and to a server 270 for further analysis, etc. As disclosed above, computing device 250 can display such information. For example, computing device 250 can display the speed (rpm), bevel angles, miter angles, brush wear, the presence or condition of a guard and/or attachment, etc. of the power tool 200.

Like battery pack 100, power tool 200 may be programmed to change different attributes or features. For example, a user can set the maximum motor speed or power, or provide a predetermined output (such as half the motor speed or power) when not within the vicinity of computing device 250, etc. Similarly, it may be desirable to control any adjustable feature in a power tool via computing device 250. For example, the computing device 250 may adjust output pressure in compressors, the amount of grease outputted by a grease gun when the trigger is pulled (persons skilled in the art will recognize that computing device 250 can set a grease gun's pump to run for X pump cycles whenever the trigger is pulled; the higher the number of pump cycles per trigger pull, the larger the amount of grease outputted), the speed of a flywheel-based nailer (such as the one disclosed in US Patent No. 7,137,541, which is wholly incorporated herein by reference) in order to adjust for a different nail size or material in which the nail is being driven into, or a desired temperature for a heated jacket (such as the one disclosed in US Publication No. 2011/0108538, which is wholly incorporated herein by reference).

The user can also enable and disable different modes of operation, such as allowing/not allowing power tool 200 to rotate in a reverse direction. As mentioned above, the user can enter such commands via a keyboard or touchscreen on computing device 250 and/or by providing verbal commands recognized by computing device 250.

Alternatively, computing device 250 can be used to determine the appropriate attribute or feature to modify. For example, computing device 250 can scan a visual code (such as a bar code or QR code) on an accessory, such as a grinding wheel, via its camera, determine the identity of the accessory and modify the attributes of the power tool 200 accordingly. In such manner, computing device 250 can determine that, for example, a small grinding wheel has been installed on grinder/power tool 200 and that the maximum speed should be 10000 rpm. Computing device 250 would then program grinder/power tool 200 to not exceed such maximum speed. This would allow a user to use a grinder as a polisher (and vice versa) by selecting the appropriate speed for the desired accessory.

Computing device 250 could also scan the accessory itself with its camera, such as the shape of a drill bit or router bit, determine the identity and attributes of the accessory based on the resulting image and program power tool 200 to match the attributes of the accessory. Alternatively, computing device 250 could scan the workpiece or an identifying code thereon which identifies the type of material constituting the workpiece. Persons skilled in the art will recognize that recognition software can be used to determine the identity of the accessory based on the shape of the accessory. Computing device 250 can then access a database within the computing device 250 or in a separate server connectable via a telecommunications network, such as a cellular network, to obtain the information on the different attributes of the accessory.

In addition to information as to the specific accessory, the database may provide the app with information requests. For example, for a particular router bit, the database may instruct the app to ask the user what type of wood is being shaped with the router bit. The app can then customize the power tool settings depending on the type of wood selected by the user, allowing for a more efficient work operation. The app could also indicate whether the router bit is not recommended for that particular type of wood, and/or whether a different router bit is better for shaping that particular type of wood.

Persons skilled in the art will recognize that, if computing device 250 has an RFID system, computing device 250 could read an RFID tag disposed on the accessory, then access the database to obtain the attributes of the accessory, and then modify/program power tool 200 accordingly.

Computing device 250 may also be used to modify the different trigger profiles of power tool 200 as described in US Publication No. 2011/02544272, filed on April 7, 2011, entitled "Power Tool Having a Non-Linear Trigger-Speed Profile," which is hereby fully incorporated by reference. A user can use computing device 250 to select between the different trigger profiles applicable to power tool 200. Alternatively, the user can use computing device 250 to program a customized trigger profile.

Other customizable features on power tools and other products may include the blink patterns of LEDs, the time period that an LED remains on after releasing a trigger switch, audio beeping patterns for particular conditions in products with speakers or piezos, the selected radio station and/or volume on a radio charger 210, etc. The app can also turn on and off the power tool 200 or accessories thereof like a dust collector, open/close gates therein, etc.

If the power tool 200 has servos that can be used to adjust different features of power tool 200 (such as the miter saw disclosed in US Patent Publication No. 2001/0000856, filed on January 5, 2001, and wholly incorporated herein by reference), the app can be used to adjust the different features by controlling the servos. For example, the user can select a bevel angle on the computing device 250 and the app will control the bevel angle servo to the desired location. In this manner, the user can program a list of desired workpieces, i.e., a cut list, and the app can control the miter saw/power tool 200 to obtain those cuts. Similarly, the servos can be used to adjust the stroke length in a saw that allows for such adjustment, such as in reciprocating saws or jigsaws.

It may be beneficial to provide servos to perform functions that are difficult to do, like opening a blade clamp on a grinder or a recip saw. Rather than requiring the user to torque open a blade clamp, the user would select such operation in the app.

Computing device 250 can also be programmed to control an apparatus, such as the router disclosed in US Patent Publication No. 2006/0206233, filed on March 9, 2005, which is wholly incorporated herein by reference. The app can control such apparatus to obtain the cuts selected by the user.

Persons skilled in the art will recognize that these features may be programmed individually, e.g., changing the maximum motor speed, and/or in bulk by selecting a particular setting. In other words, the user can select a LAG bolt setting where the maximum motor speed is adjusted, a particular trigger profile is selected, and a particular alert is chosen, all by selecting one setting on computing device 250.

Similarly, an owner of power tool 200 can select settings for different users according to their level of skill. For example, the owner may have a standard setting for experienced users and a lowered power setting for less skilled users. In this manner, the owner can change the torque output or the start-up speed curve (and other attributes) of a rotary hammer/power tool 200 to a setting that is manageable by an inexperienced user, such as a soft-start setting.

Persons skilled in the art will recognize that, if each individual carries an ID or RFID tag that can be scanned or recognized by the computing device 250 or power tool 200, the computing device 250 (and/or power tool 200) can detect when power tool 200 is used by a new user (due to the presence of the new ID/RFID tag). Computing device 250 (and/or power tool 200) can then change the settings of power tool 200 to accommodate the new user. Furthermore, computing device 250 could show a how-to-use video or provide other information to the new user, especially if the new user is noted to be an inexperienced user.

A user can even select specific alerts for the power tool 200, as she did for battery pack 100. For example, the user can program computing device 250 to display a warning when a specific condition occurs. These conditions may include brush wear beyond a selected threshold, high current draw (possibly representing an overload condition), etc.

Persons skilled in the art will recognize that these alerts can have a visual component, such as an alert window displayed on the screen of computing device 250, and/or an audio component, such as a sound or song (possibly selected by the user) played through the speaker(s) of computing device 250 or a radio charger 210, or through an earphone connected to computing device 250. Persons skilled in the art will recognize that such earphone could be wireless connected to computing device 250 via BlueTooth, or could be connected via a wire to the computing device 250.

Furthermore, a user can also use computing device 250 to locate the selected power tool, battery pack or other product (step 349). Due to the wireless communication between computing device 250 and battery pack 100, it is possible to send a command from computing device 250 to battery pack 100 to start emitting a sound via speaker/piezo 127, so as to assist in locating such battery pack 100. It is also possible to have the computing device 250 poll all nearby battery packs 100 for a particular state. Thus computing device 250 can determine the battery pack with the highest/lowest charge, highest/lowest temperature, most charge cycles, etc., then send a command to the particular battery pack 100 to start emitting a sound.

The user can also select going back to a home menu to end the app (step 350). This would end the app (step 355) and go to a home menu of the computing device 250.

The app can also monitor the battery pack 100, charger 210 and/or power tool 200 (step 360). The app can enter a monitoring state automatically and/or when selected by the user. During this monitoring process, the app can keep track of power tool usage, present current draw, etc. and store and/or use that information for analysis by a service department. In this manner, the service department can determine whether a power tool 200 has been abused.

The app can also use that information to better utilize the power tool 200. For example, the app can receive PWM, voltage and/or current draw information from battery pack 100 and/or power tool 200 and establish a macro that would allow the user to repeat the current draw. Persons skilled in the art will recognize that such current draw profile can represent a torque curve for driving a fastener into a surface. Having a repeatable draw profile will allow the user to easily set a custom torque setting.

Persons skilled in the art will recognize that an app can be looking for similar patterns and adjust battery pack 100 and/or power tool 200 accordingly for better efficiency, effectively learning the user's use patterns. The app can do such analysis on data patterns, or even in real time. For example, the app can receive current information, trigger position and/or speed information, and run power tool 200 using that information to maximize run-time. Other information that the app can monitor includes bias force/bias load, gear settings, battery voltage, the presence of on-tool guard or side handles, etc.

Persons skilled in the art will recognize that, if the app monitors the presence of on-tool guards or side handles, the app can prevent use of the power tool 200 if the guards or side handles are not detected, and/or limit the power output for better control. Persons skilled in the art will also recognize that the presence of these guards and side handles can be detected by providing, for example, switches on power tool 200 that get activated once the guards or side handles are installed.

Similarly, if the app monitors motor current draw and gear setting, the app can select and/or indicate the best gear ratio (or speed setting) to run at optimum efficiency. If the motor is drawing a lot of current and the transmission is set at a high speed, the app may alert the user to switch to a lower speed or may switch the gear setting automatically.

Persons skilled in the art will understand that the app can limit the power tool's output speed and torque by monitoring bias force/bias load if the app determines that the bias load is not adequate to keep a screwdriver bit engaged to a screw. The app could also turn off or delay the impacts provided by the transmission of power tool 200.

The app can also use the sensors in the computing device 250 to determine working conditions and adjust the usage of battery pack 100 and/or power tool 200. For example, if the user wears the computing device 250 on his wrist and the app notices a sudden movement (by monitoring the accelerometers in the computing device 250), the app can shut down the power tool 200 by turning off battery pack 100 or power tool 200, or limit the amount of power provided by battery pack 100 or to power tool 200. The accelerometers in the computing device 250 can also be used to monitor vibration. When a certain threshold of vibration is reached, the user can be alerted to take a rest break.

Similarly, the app can adjust the brightness of the LEDs in power tool 200 according to the output from the ambient light sensors of computing device 250. For example, if the ambient light sensors of computing device 250 detect a dark environment, the app can increase or decrease the brightness of the LEDs.

Additionally, the app can use the on-board microphone of computing device 250 to listen to the ambient noise. The app can then create an opposite soundwave and play it through an on-board speaker and/or transmit it to the radio charger 210. Persons skilled in the art will recognize that playing an opposite soundwave will cancel or lower the ambient noise.

The computing device 250 can also control power tool 200 and/or charger 210 according to the use of the computing device 250. For example, if computing device 250 receives a phone call, the app can turn off power tool 200 and/or lower the volume on radio charger 210.

Persons skilled in the art will understand that computing device 250 can also be used for controlling multiple items at the same time. For example, when the app detects a power tool 200 being turned on, such as when the user pulls on a trigger, the app can increase the volume on radio charger 210.

The app can also transmit data (step 370) about battery pack 100, power tool 200, charger 210, portable power supply 215 and/or non-motorized sensing tool 220 to specific destinations. For example, a wall scanner 220 may transmit data about a scanned wall via computing device 250 to an archive or to a store website. Similarly, the image data received from an IR camera can be sent to the computing device 250 and made part of a document drafted in computing device 250, which in turn can be emailed or transmitted to a client.

The description of the invention is merely exemplary in nature and, thus, variations that do not depart from the gist of the invention are intended to be within the scope of the invention. Such variations are not to be regarded as a departure from the scope of the invention.

## Claims

1. A system comprising:
at least one of a power tool battery pack, a power tool, a portable power supply, a non-motorized sensing tool, and a power tool battery pack charger;
a separate computing device for communicating wirelessly with the at least one of the power tool battery pack, the power tool, the portable power supply, the non-motorized sensing tool, and the power tool battery pack charger;
wherein the computing device monitors a data value representative of a condition of the at least one of the power tool battery pack, the power tool, the portable power supply, the non-motorized sensing tool, and the power tool battery pack charger, and the computing device performs an action responsive to the monitored data value.

2. The system of Claim 1, wherein the computing device and at least one of the power tool battery pack, the power tool, the portable power supply, the non-motorized sensing tool, and the power tool battery pack charger communicate via a wireless communication system consisting of at least one of Wi-Fi, BlueTooth, Zigbee, infrared light and radio frequency signals.

3. The system of Claim 1, wherein the computing device monitors at least one of the group consisting of voltage, current, temperature, speed, bevel angle, miter angle, brush wear, presence or condition of a guard, presence or condition of an attachment, bias force, gear setting, voltage, current draw, and accelerometer output of the computing device.

4. The system of Claim 1, wherein the action performed by the computing device is displaying the monitored data value.

5. The system of Claim 4, wherein the monitored data value is at least one of the speed, bevel angle, miter angle, brush wear, presence or condition of a guard, presence or condition of an attachment.

6. A system comprising:
at least one of a power tool battery pack, a power tool, a portable power supply, a non-motorized sensing tool, and a power tool battery pack charger, the at least one of the power tool battery pack, the power tool, the portable power supply, the non-motorized sensing tool, and the power tool battery pack charger having a memory;
a separate computing device for communicating wirelessly with the at least one of the power tool battery pack, the power tool, the portable power supply, the non-motorized sensing tool, and the power tool battery pack charger;
wherein the computing device transmits a data value to the at least one of the power tool battery pack, the power tool, the portable power supply, the non-motorized sensing tool, and the power tool battery pack charger, and the at least one of the power tool battery pack, the power tool, the portable power supply, the non-motorized sensing tool, and the power tool battery pack charger performs an action responsive to the transmitted data value.

7. The system of Claim 6 wherein the action is at least one of a group consisting of announcing when the power tool battery pack is at full charge, announcing when the power tool battery pack has exceeded a temperature threshold, disabling the at least one of the power tool battery pack, the power tool, the portable power supply, the non-motorized sensing tool, and the power tool battery pack charger, adjusting a working parameter of the at least one of the power tool battery pack, the power tool, the portable power supply, the non-motorized sensing tool, and the power tool battery pack charger, adjusting a mechanism of the at least one of the power tool battery pack, the power tool, the portable power supply, the non-motorized sensing tool, and the power tool battery pack charger, and emitting a sound.

8. The system of Claim 7, wherein the working parameter is at least one of the group consisting of an amount of delivered grease, a speed, a temperature, a rotational direction, a lighting pattern, a desired radio station, a miter angle, a bevel angle, a maximum torque output, a maximum current draw, an audio volume, and a gear setting.

9. The system of Claim 6, wherein the computing device and at least one of the power tool battery pack, the power tool, the portable power supply, the non-motorized sensing tool, and the power tool battery pack charger communicate via a wireless communication system consisting of at least one of Wi-Fi, BlueTooth, Zigbee, infrared light and radio frequency signals.
